Europäisches Patentamt

European Patent Office

Office européen des brevets

(19)

(11) Publication number: **0 282 597**
**A1**

## EUROPEAN PATENT APPLICATION

published in accordance with Art. 158(3) EPC

(12)

(21) Application number: **87904974.0**

(22) Date of filing: **04.08.87**

Data of the international application taken as a basis:

(86) International application number:
**PCT/JP87/00584**

(87) International publication number:
**WO88/01122 (11.02.88 88/04)**

(51) Int. Cl.³: **H 04 M 1/00**
**H 04 B 7/26**

(30) Priority: **05.08.86 JP 183866/86**
**08.07.87 JP 170576/87**

(43) Date of publication of application:
**21.09.88 Bulletin 88/38**

(84) Designated Contracting States:
**DE FR GB IT NL**

(71) Applicant: **IWAI, Seizo**
**1549, Souja, Soujamachi**
**Maebashi-shi, Gunma 371(JP)**

(72) Inventor: **IWAI, Seizo**
**1549, Souja, Soujamachi**
**Maebashi-shi, Gunma 371(JP)**

(74) Representative: **Pendlebury, Anthony et al,**
**Page, White & Farrer 5 Plough Place New Fetter Lane**
**London EC4A 1HY(GB)**

(54) **WIRELESS HANDSET FOR A TELEPHONE SET.**

(57) A handset is provided with a microphone, a speaker, as well as a wireless transmitter and a wireless receiver, so that voice signals or voice waves can be transmitted and received. A wireless main unit is provided between the handset and the telephone main unit, the wireless main unit having a signal transmission line, a wireless transmitter and a wireless receiver, so that the signals can be transmitted and received between the telephone set and the handset. When the handset is connected to the wireless main unit through a cord, the voice signals are transmitted to or received from the telepone set through the signal transmission line of the wireless main unit. When the cord of the handset is disconected from the wireless main unit, the handset and the wireless main unit are coupled together in a wireless system by wireless transmitters and wireless receivers provided in the handset and in the wireless main unit. Therefore, the telephone set can be used as an ordinary one or as a wireless one within a predetermined range.

F I G. I

0282597

TELEPHONE TRANSMITTER-RECEIVER SET

CAPABLE OF OPERATING HANDSET BY WIRELESS SYSTEM

TECHNICAL FIELD:

The present invention relates to a telephone transmitter-receiver set capable of operating a handset removed from a telephone main body by a wireless system.

BACKGROUND ART:

In the conventional telephones, a telephone main body and a handset are interconnected through a cord through which the audio signals are transmitted and received. Therefore when a user wants to move while using the telephone, he or she must hold the handset by one hand and carry the telephone main body by the other hand.

When the user moves while carrying the telephone as described above, he or she suffers some inconvenience because neither hands are free and the range of movement is limited.

DISCLOSURE OF THE INVENTION:

OBJECT

In view of the above, the primary object of the present invention is to provide a telephone transmitter-receiver set which can be used by removing a cord.

MEANS FOR ATTAINING THE OBJECT

To the above and other ends, the present invention provides a telephone transmitter-receiver set comprising

-1-

a handset having a speaker, a microphone, a wireless transmitter and a wireless receiver for transmitting or receiving the audio signal waves, and a wireless device main body having a signal transmission line, a wireless transmitter and a wireless receiver for the transmission and reception between a telephone main body and said handset, whereby when said handset and said wireless device main body are interconnected by a cord, the transmission and reception of the audio signals are carried out through the signal transmission network in said wireless device main body, but when the cord interconnecting between said handset and said wireless device main body is removed or separated, said handset and said telephone main body are interconnected in a wireless system manner by said wireless transmitters and said wireless receivers of said handset and said wireless device main body.

OPERATION

When the handset and wireless device are interconnected to each other through the cord, the transmission and reception of the audio signals between the handset and the telephone main body are carried out through the cord and the signal transmission network in the wireless device main body. That is, the telephone transmitter-receiver set operates in a manner substantially similar to that of the conventional telephones. However, when the cord interconnecting between the handset and the wireless device main body is disconnected, the wireless transmitters and receivers of the handset and the wireless device main body are actuated so that the handset and the telephone main body are interconnected by a wireless system. Therefore, the user can use the handset freely within the operating range of the wireless transmitters and receivers.

ADVANTAGES OF THE INVENTION

As described above, according to the present invention, the wireless device main body is interposed between the handset and the telephone main body and the wireless devices are incorporated even in the handset so that the handset can be removed from the telephone main body and used. As a result, convenience of telephones can be drastically improved. Furthermore, when the handset is connected through the cord to the telephone main body, it can be used in a manner substantially similar to that of the conventional handset telephones and there arises no problem at all.

BRIEF DESCRIPTION OF THE DRAWINGS:

FIG. 1 is a block diagram illustrating the construction of a wired telephone having a wireless function in accordance with the present invention;

FIG. 2 is a perspective view illustrating the outer appearance of the wired telephone set shown in FIG. 1;

FIG. 3 shows a preferred embodiment of the present invention and is a detailed circuit diagram of the wireless device main body shown in FIG. 1;

FIG. 4 is a detailed circuit diagram of the handset shown in FIG. 1; and

FIG. 5 is a detailed circuit diagram of another preferred embodiment of the present invention.

BEST MODES FOR CARRYING OUT THE INVENTION:

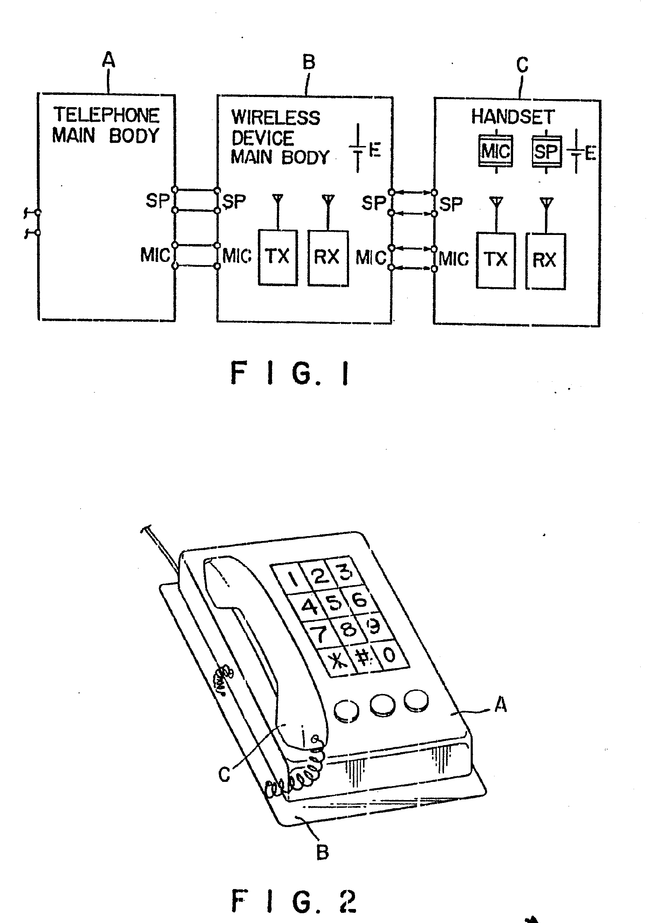

FIG. 1 illustrates the whole construction of the wired telephone having a wireless function in accordance with the present invention and comprising a telephone main body A, a wireless device main body B and a handset C. The telephone main body A is substantially similar in construction and operation to that of the conventional telephones and each of the wireless main body B and the handset C has a wireless transmitter TX and a wireless receiver RX. The wireless device main body B and the handset C are interconnected by a wireless system. The wireless device main body B has a conventional signal transmission network and can be directly coupled to the handset C as in the case of the conventional telephones.

That is, the telephone main body A and the handset C can be interconnected in one of two interconnection modes. When the handset C and the wireless device main body B are interconnected through the cord, the wireless device main body B is switched into the non-operative mode so that the handset C is directly connected to the

-4-

telephone main body A. On the other hand, when the interconnection between the handset C and the wireless device main body B through the cord is cut, they are coupled to each other in a wireless system mode.

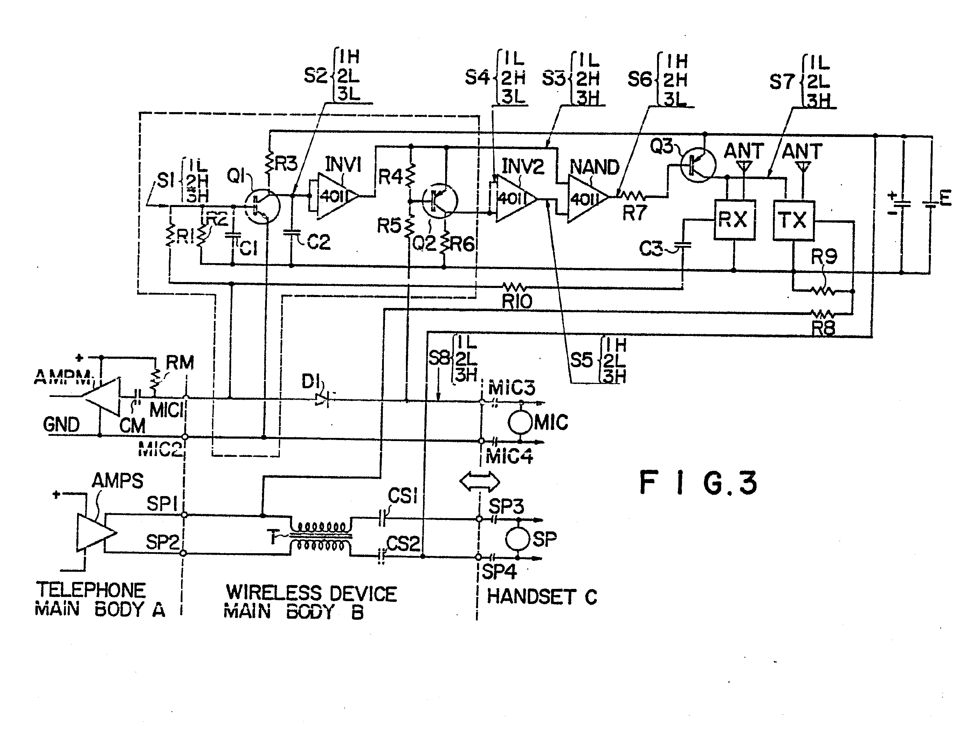

FIG. 2 shows the outer appearance of the telephone in accordance with the present invention and in general the telephone main body A is the main body of a conventional telephone. Both of the wireless device main body B disposed under the telephone main body A and the handset C each having the wireless transmitter and the wireless receiver are unique elements of the present invention.

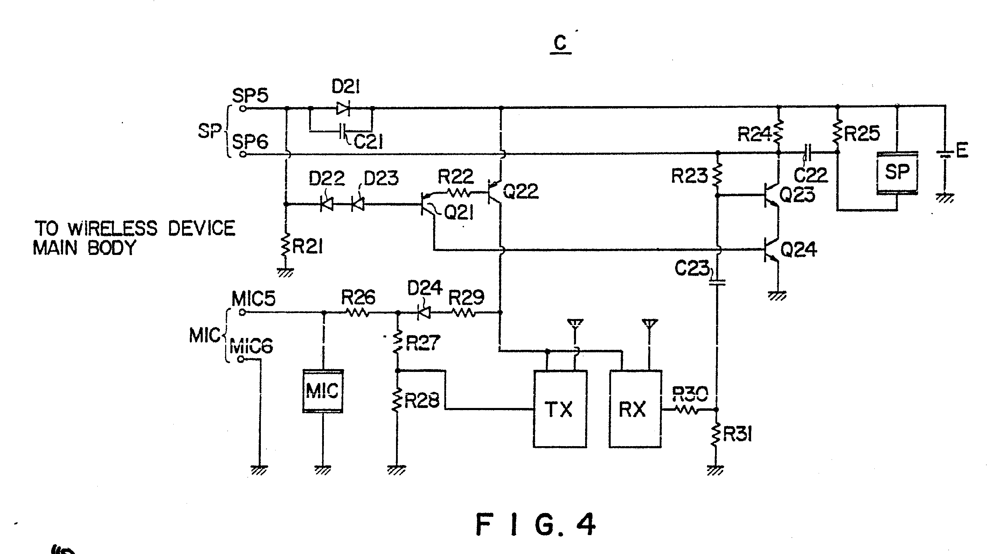

FIG. 3 shows a circuit diagram of the wirless device main body B shown in FIG. 1 and FIG. 4 is a circuit diagram of the handset C.

The modes of operation of these circuits will be described below first with reference to FIG. 3 and next with reference to FIG. 4.

The circuitry of the wireless device main body B shown in FIG. 3 includes the transmitter TX, the receiver RX, a control circuit which controls the operation of the transmitter TX and the receiver RX and which includes transistors Q1-Q3 and an audio signal circuit for exchanging the signals between the transmitter TX and the receiver RX. The above-mentioned circuits, the transmitter and the receiver are activated by the electric power supplied from a built-in power supply E.

In response to a reference potential at a microphone terminal MIC 3 of two input-output terminal pairs in the wireless device main body B, the control circuit enables or disables the transmitter TX and the receiver RX. That is, the potential S8 at the microphone terminal MIC3 is obtained by utilizing the fact that when the cord of the wireless device main body B for connecting the latter to the handset C (FIG. 4) is pulled out, the potential S8 rises from a zero potential to a floating potential. In this case, the wireless device main body B and the handset C are interconnected by the wireless system so that the handset C can be connected to a telephone line.

The control circuit has a total of three modes because of the two modes in which the cord is connected and is disconnected respectively, in the case of the connection mode, there still exists two modes in which the handset C is taken off from the telephone main body A and is reset thereon, respectively.

Now it is assumed that the cord of the handset C be connected to the wireless device main body B. Then, the potential S8 at the microphone terminal MIC3 becomes a zero potential or L because the microphone terminal MIC3 is grounded through a microphone shown in FIG. 4.

When the handset C is placed on the telephone main body A under such condition, a microphone circuit is "OFF" because of the operation of a hook switch in the telephone main body A. As a result, the microphone does not generate the voltage signal in response to sound waves so that the potential S8 at the microphone terminal MIC3 is maintained in the "L" state. In like manner, the potential S1 of another microphone terminal MIC1 remains in the "L" state.

The potential S1 is applied to the base of the transistor Q1 through a voltage divider consisting of resistors R1 and R2. A capacitor C1 is connected in parallel with the resistor R2 of the voltage divider. Since the base of the transistor Q1 is in the "L" state, the collector potential S2 rises to the "H" state and is inverted by an inverter INV1. The output potential S3 derived from the inverter INV1 in the "L" state is applied to the emitter of the transistor Q2, to the base of the transistor Q2 through a resistor 4 and to the grounded base of the microphone terminal MIC3 through a resistor 5. As a result, the transistor Q2 remains in the "OFF" state so that the potential S4 at the collector grounded through a resistor R6 drops to the "L" state. The potential S4 is applied to an inverter INV2 and is inverted into the signal in the "H" state which in turn is applied to one input terminal of a NAND gate NAND. The output S3 derived from the inverter INV1 is applied to the other input terminal of the NAND gate. As a result, the output S6 derived from the NAND circuit NAND changes to a "H" state and is applied through a resistor 7 to the base of the transistor Q3. As a result, the transistor Q3 is turned on and its output S7 changes to a "L" state so that both of the transmitter TX and the receiver RX remain in the inoperative or de-energized mode.

Next the mode of operation when the handset C is picked up will be described. In this case, a hook switch (not shown) in the telephone main body A is turned on so that a capacitor-microphone voltage of the order of DC 2V appears through a resistor RM at the microphone terminal MIC1 connected to the input terminal of a microphone amplifier AMPM through a capacitor CM. This voltage is applied as a voltage S8 to the microphone terminal MIC3 through a diode D1 and simultaneously the potential S1 in a "H" state is applied to the base of the transistor Q1. Then the output S2 derived from the transistor Q1 drops to a "L" sate so that the output S3 of the inverter INV1 rises to a "H" state and is applied to the emitter of the transistor Q2. A divided voltage of the signal S3 and the signal S8 is applied to the base of the transistor Q2. Even though the signal S3 remains in a "H" state as described above, but S8 remains in a "L" state because the microphone (shown in FIG. 4) is connected as a load. Therefore a bias voltage is applied to the base of the transistor Q2 so that the latter is turned on and therefore its collector output S4 goes HIGH. The output S5 from the inverter INV2 drops to a "L" state and is applied to the NAND circuit. Since the signal S3 (in a "H" level) and the signal S5 (in a "L" state) are applied to the NAND gate so that its output S6 rises to a "H" state and is applied to the transistor Q3. The transistor Q3 remains in an "OFF" state so that both the transmitter TX and the receiver RX remain in the inoperative or de-energized mode.

When the handset C is picked up, the audio signal from the handset C is applied from the microphone terminal MIC3 through the diode D1 to the microphone terminal MIC1 on the side of the telephone main body A. The audio signal derived from the output terminal of the speaker amplifier AMPS of the telephone main body A is applied from speaker terminals SP1 and SP2 through a parallel transformer T and capacitors CS to speaker terminals SP3 and SP4 on the side of the handset C. It follows therefore that the wireless device main body B now functions as a relaying device.

The above-described two examples are those when both the transmitter and receiver remain in the inoperative or deenergized mode and next the case in which the transmitter and receiver are switched to the operative or energized mode will be described below.

In this case, the microphone to be interconnected between the microphone terminals MIC3 and MIC4 is disconnected. That is, the handset C is picked up and the cord interconnecting between the handset C and the wireless device main doby B is disconnected. Then, the signals S1-S3 remain unchanged while the signal S8 rises to a "H" state. As a consequence, the output S4 from the transistor Q2 is switched to a "L" state and the output S5 from the inverter INV2 rises to a "H" state so that the output S6 of the NAND gate drops to a "L" state and consequently the transistor Q3 is turned on and outputs a "H" state signal S7. Then both the transmitter TX and the receiver RX are turned on.

The signal transmission is now carried out between the transmitter TX and the receiver RX on the one hand and the transmitter and the receiver of the handset C shown in FIG. 4. The handset C will be described in detail below.

The transmitter TX modulates the audio signal transmitted from the telephone line through a voltage divider consisting of resistors 8 and 9 and transmits it from its antenna. The receiver RX applies the received audio signal through the capacitor C3, a resistor R10 and the microphone terminal MIC1 to the capacitor CM and then to the telephone main body A.

FIG. 4 shows the construction of the handset C with a capacitor microphone MIC and a speaker SP. The audio signal picked up by the microphone MIC is transmitted through the cord or through the wireless system to the wireless device main body B while the audio signal from the wireless device main body B is received through the cord or through a wireless system.

That is, when the handset C and the wireless device main body B are interconnected to each other through the cord (not shown); that is, when the terminals SP5 and SP6 are connected to the terminals SP3 and SP4 of the wireless device main body B while the terminals MIC5 and MIC6 are connected to the terminals MIC3 and MIC4 of the wireless device main body B, the telephone transmitter-receiver set in accordance with the present invention operates substantially in the same manner as the conventional telephones. However, when the cord is disconnected, the signals are exchanged between the transmitter TX and the receiver RX in a radio or wireless system.

When they are interconnected through the cord, a voltage of the order of DC 5V is applied from the telephone main body A through the wireless device main body B to the terminal SP5, no bias voltage is applied to transistors Q21 and Q22 interconnected in a Darlington manner through a resistor R22 so that these transistors remain in the inoperative state. It follows therefore that no power is supplied to the transmitter TX and the receiver RX so that they remain in the turned-off state. Since the transistor Q21 is turned off, a transistor Q24 is also turned off and all the active circuits shown in FIG. 4 remain in the inoperative state so that the energy of a battery E is not consumed at all. The output audio signal from the microphone MIC is applied through the terminals MIC5 and MIC6 to the wireless device mian body B and then to the telephone main body A and the audio signal from the telephone main body A is transmitted through the wireless device main body B and the terminals SP5 and SP6 to the speaker SP.

When the cord is disconnected, the terminal SP5 drops to ground potential so that the bases of the Darlington connected transistors Q21 and Q22 are grounded through diodes D23 and D22 and a resistor R21. Then the transistors Q21 and Q23 are turned on so that the electric power is supplied to the transmitter TX and the receiver RX while a transistor Q24 is turned on. Then the output audio signal from the microphone MIC is applied through a voltage divider consisting of resistors R27 and R28 to the transmitter TX which in turn transmits the received audio signal from its antenna. The signal received by the receiver RX is applied through a voltage divider consisting of resistors R30 and R31 and a capacitor C23 to the base of a transistor Q23 which is biased through a resistor R23 and is amplified and applied through a capacitor C22 to the speaker SP. A diode D24 and resistors R29, R24 and R25 are component parts which establish a DC line or circuit.

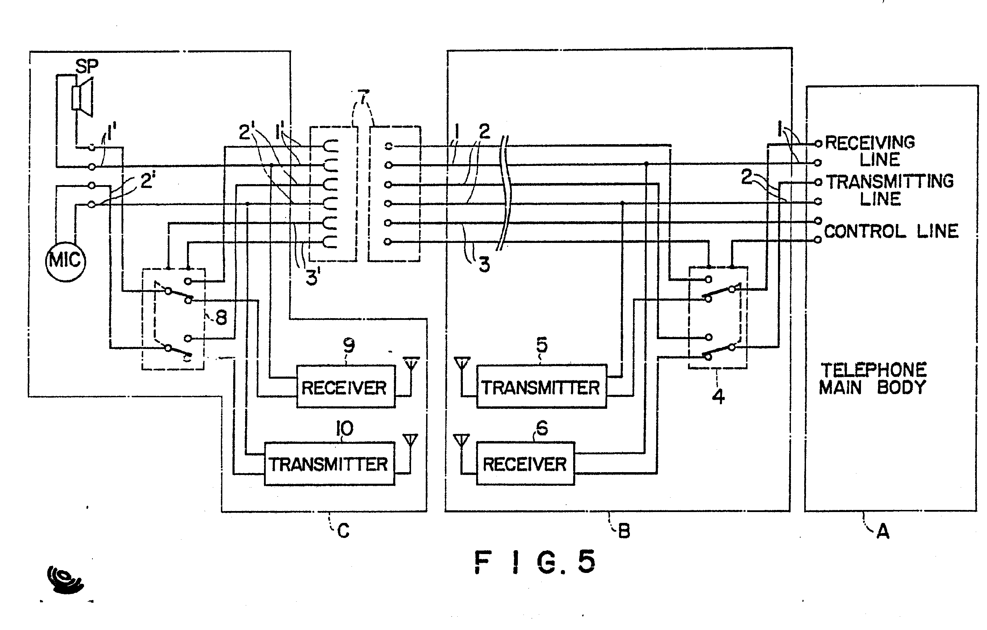

FIG. 5 shows another embodiment of the present invention comprising a telephone main body A, wireless device unit B, and a handset C which are indicated by three blocks defined by one-dot chain lines. The handset C and the telephone main body A are interconnected to each other through telephone lines consisting of receiving lines 1 and 1', transmission lines 2 and 2' and control lines 3 and 3'. The receiving lines 1, the transmission lines 2 and the control lines 3 are connected to the receiving lines 1', the transmission lines 2' and the control lines 3' through a connector 7 with six terminals which is used as a switch for connecting or disconnecting the telephone lines.

The receiving lines 1 and 1' and the transmission lines 2 and 2' are connected to relay contacts and in response to the switching of the relay contacts, the telephone lines establish a through-type transmission line extended from the handset C to the telephone main body A or the transmission circuit is established between the transmitter and the receiver. The relay is energized or de-energized in response to the condition of the control lines 3 which varies depending upon whether the connector 7 inserted between the handset C and the telephone main body A is connected or not.

More particularly, when the connector is connected, relays 8 and 4 are energized, the audio signal to the speaker SP of the handset C and the audio signal from the microphone MIC are transmitted through the telephone circuit from the contacts of the relays 8 and 4.

On the other hand, when the connector is disconnected, the relays 8 and 4 are de-energized so taht their contacts are reversed. As a consequence, the audio signal to the speaker SP is transmitted through the contacts of the relay to the receiver 9 while the audio signal from the microphone MIC is transmitted through the contacts of the relay to a transmitter 10. The signal transmission is carried out between the transmitter 10 and the receiver 9 on the one hand and a transmitter 5 and a receiver 6 on the other hand which are also turned on or off by the relay contacts. Both the transmitters and receivers need the power supplied from a power supply (not shown) which in turn must be turned on or off by connecting the normally closed contacts of the relays 8 and 4 in series to the power supply.

As described above, even when the connector is not connected, the telephone can be used by the wire system or the wireless. The switching between the wire system and the wireless system can be freely made even when the telephone is being used.

In the above-described embodiment, electromagnetic relays are used as the relays 8 and 4, but it is to be understood that the electronic relays which are so-called stationary relays may be equally used.

INDUSTRIAL APPLICABILITY:

The telephone transmitter-receiver set in accordance with the present invention can be applied to the conventional telephones in a simple manner so that the former can be used as a radiotelephone even though the operating range is limited. Furthermore it is simple in construction and easy to operate as compared with the conventional radiotelephone systems.

WHAT IS CLAIMED IS:

1.      A telephone transmitter-receiver set capable of operating a handset by a wireless system comprising:

a handset which has a speaker, a microphone, a wireless transmitter and a wireless receiver and which can transmit or receive audio signals or audio signal waveforms; and

a wireless device main body which has a signal transmission circuit, a wireless transmitter and a wireless receiver and which accomplishes the transmission between a telephone main body and said handset,

whereby when said handset is connected to said wireless device main body through a telephone cord, the audio signals are transmitted between said handset and said telephone main body through said signal transmission circuit, but when said cord interconnecting between said handset and said wireless device main body is disconnected, said handset and said telephone main body are coupled to each other by a wireless system consisting of said wireless transmitters and said wireless receivers of said handset and said telephone main body.

2.      In a wire telephone of the type in which a telephone main body and a handset have transmitters and receivers so that when said handset is disconnected from said telephone main body, the audio signal transmission by a wireless system is established between said telephone main body and said handset, a wire telephone with a radiotelephone function characterized by the provision of a detection circuit for detecting the supply of a predetermined voltage to a microphone incorporated in said handset when said handset is picked up from said telephone main body, whereby when said detection circuit outputs a detection output, said transmitter and said receiver incorporated in said telephone are switched to the operative mode.

3. A wire telephone as set forth in Claim 2, wherein said microphone is a capacitor microphone.

4. A radiotelephone set characterized by comprising:

a telephone circuit having receiving lines, transmission lines and control lines;

a wireless device main body which has a relay with contacts inserted in said receiving lines, contacts inserted in said transmission lines and a coil connected to said control lines and which has a transmitter and a receiver which are controlled to be turned on or off in response to the switching operation of said relay; and

a handset which has a speaker for receiving the audio signals from said receiving lines, a microphone for generating the audio signals to be transmitted to said transmission lines, a relay which has contacts which are connected through a connector to said receiving lines, contacts which are connected to said transmission lines through said connector and a coil connected to said control lines, and a receiver and a transmitter which is controlled to be turned on or off in response to the switching operation of said relay so that in response to the switching operation of each contact, said speaker and said microphone are connected to said lines or said transmitter and said receiver and which is connected to said telephone main body through said telephone circuit, whereby when said handset is connected to said wireless device main body through said connector, said speaker and said microphone are connected to said telephone circuit, but when said connector disconnects the interconnection between said handset and said wireless device main body, said relays in said handset and said wireless device main body are switched so that said transmitter of said handset is turned on and said speaker and said microphone are connected to said transmitter and said receiver, respectively, while said transmitter and said receiver in said wireless device main body are turned on.

5.      A radiotelephone set as set forth in Claim 4, wherein said relays consist of electromagnetic relays.

6.      A radiotelephone set as set forth in Claim 4, wherein said relays consist of electronic relays.

0282 5

**A** — TELEPHONE MAIN BODY

**B** — WIRELESS DEVICE MAIN BODY $\perp$ E

SP | SP

MIC | MIC | TX | RX

SP | SP

MIC | MIC

**C** — HANDSET

MIC | SP $\perp$ E

TX | RX

# F I G. I

# F I G. 2

FIG. 3

**F I G. 4**

FIG. 5

# INTERNATIONAL SEARCH REPORT

International Application No | **PCT/JP87/00584**

## I. CLASSIFICATION OF SUBJECT MATTER (if several classification symbols apply, indicate all) ³

According to International Patent Classification (IPC) or to both National Classification and IPC

Int.Cl⁴    H04M1/00, H04B7/26

## II. FIELDS SEARCHED

### Minimum Documentation Searched ⁴

| Classification System | Classification Symbols |
|---|---|
| IPC | H04M1/00, 1/02, H04B1/034, 1/40 |

### Documentation Searched other than Minimum Documentation to the Extent that such Documents are Included in the Fields Searched ⁵

Jitsuyo Shinan Koho      1926 - 1987
Kokai Jitsuyo Shinan Koho    1971 - 1987

## III. DOCUMENTS CONSIDERED TO BE RELEVANT ¹⁴

| Category * | Citation of Document, ¹⁶ with indication, where appropriate, of the relevant passages ¹⁷ | Relevant to Claim No. ¹⁸ |
|---|---|---|
| X | JP, A, 59-28734 (NEC Corporation) 15 February 1984 (15. 02. 84) P.2, upper left column, lines 6 to 16 (Family: none) | 1 |
| A | JP, A, 59-28734 (NEC Corporation) 15 February 1984 (15. 02. 84) P.2, upper left column, lines 6 to 16 (Family: none) | 2-6 |
| A | JP, Y2, 59-19478 (Fujitsu, Ltd.) 5 June 1984 (05. 06. 84) Column 4, lines 18 to 24, Fig. 3 (Family: none) | 2-6 |
| A | JP, Y2, 59-10830 (Aiwa Co., Ltd.) 4 April 1984 (04. 04. 84) Column 6, lines 9 to 25 (Family: none) | 2-6 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| October 8, 1987 (08. 10. 87) | October 19, 1987 (19. 10. 87) |

| International Searching Authority ¹ | Signature of Authorized Officer ²⁰ |
|---|---|
| Japanese Patent Office | |

Form PCT/ISA/210 (second sheet) (October 1977)